# EUROPÄISCHE PATENTSCHRIFT

(11) **EP 0 693 501 B1**
(45) Veröffentlichungstag und Bekanntmachung des Hinweises auf die Patenterteilung: **18.11.1998**
(21) Anmeldenummer: 95110880.2
(22) Anmeldetag: 12.07.1995
(51) Int. Cl.: C08F 6/00, C08F 120/14

(54) **Verfahren zur Herstellung von unverglasten, restmonomerarmen Homopolymerisaten des Methylmethacrylats**
Process for preparing non vitrified homopolymers of methyl methacrylate having low residual monomer contents
Procédé de préparation d'homopolymères non vitrifiés de méthacrylate de methyle à faible teneur en monomère résiduel

(30) Priorität: 20.07.1994 DE 4425625
(43) Veröffentlichungstag der Anmeldung: 24.01.1996
(73) Patentinhaber: Agomer Gesellschaft mit beschränkter Haftung, 63457 Hanau (DE)
(72) Erfinder: Schüll, Volker, Dr., D-63577 Alzenau (DE); Arnoldi, Detlef, Dr., D-67273 Weisenheim am Berg (DE)
(74) Vertreter: Weber, Wolfgang

(56) Entgegenhaltungen:
- EP-A- 0 581 009
- EP-A- 0 590 468
- DE-A- 2 723 377
- DE-A- 4 118 526

## Beschreibung

Die Erfindung betrifft ein Verfahren zur Herstellung von unverglasten, restmonomerarmen Homopolymerisaten des Methylmethacrylats, bei dem man eine Dispersion eines Emulsionspolymerisats aus Methylmethacrylat herstellt. Vorteilhaft werden die Emulsionspolymerisate als Verarbeitungshilfsmittel in thermoplastischen Polymeren verwendet.

Thermoplastische Polymere, wie z. B. PVC, enthalten praktisch immer Verarbeitungshilfsmittel, die dem Thermoplasten verbesserte physikalische Eigenschaften verleihen. Je nach Zusammensetzung des Thermoplasten wird durch die Verarbeitungshilfsmittel erst eine Verarbeitung desselben möglich. So bewirken die Verarbeitungshilfsmittel bessere Bearbeitungseigenschaften, das Schmelz- und Fließverhalten wird verbessert, das Polymer und ggf. zugesetzte Additive, wie Stabilisatoren, äußere und innere Gleitmittel, Pigmente, Füllstoffe, Haftvermittler, Co-Stabilisatoren, Schlagzähmacher, Weichmacher usw., lassen sich besser und schneller homogenisieren.

Insbesondere weichmacherfreies Polyvinylchlorid (PVC) wird häufig zu Formteilen verarbeitet, wie z. B. Platten, Folien, Röhren, Schaumteilen und Formkörpern der verschiedensten Gestalt. Gerade PVC ist dabei jedoch, ohne Verarbeitungshilfsmittel schwer zu verarbeiten, da der Thermoplast vor dem Erreichen des Schmelzzustandes schon zu Zersetzungen neigt.

Aus diesem Grunde sind seit langer Zeit Verarbeitungshilfsmittel bekannt und im Einsatz, die bei PVC und anderen Thermoplasten die Verarbeitungs- und Gleiteigenschaften verbessern sollen. So beschreibt z. B. die DE-OS 19 18 893 für diverse Thermoplaste geeignete Verarbeitungshilfsmittel auf Polyacrylatbasis, wobei ein Copolymerisat aus länger- und kürzerkettigen Alkylacrylaten dem Verarbeitungshilfsmittel Gleiteigenschaften verleiht. Es handelt sich hierbei um ein kautschukartiges Polymerisat mit ungünstigen Handling-Eigenschaften, das Produkt neigt bei einem Konzentrationsprozeß, z. B. Sprühtrocknung, zum Verkleben und kann daher nur in seiner Lösung eingesetzt werden. Die gleichen Probleme bereitet auch ein in der DE-OS 21 23 384 beschriebenes Verarbeitungshilfsmittel für PVC-Polymere, das im wesentlichen Acrylester mit C₄- bis C₈-Alkoholen und bis zu 9 Gew.-% Acrylnitril enthält. Das beschriebene Verarbeitungshilfsmittel wird durch Polymerisation von Monomeren in Fettalkoholen dargestellt, die den Thermoplasten später die nötigen Gleiteigenschaften zur Verarbeitung auf Kalanderwalzen geben sollen.

Ein ähnliches Verarbeitungshilfsmittel ist aus der GB-PS 981 116 bekannt, das aus einem Copolymerisat aus Methacrylaten mit kurzem Alkohol und Acrylateinheiten mit etwas längeren Alkoholen besteht. In PVC sind hinsichtlich der Acrylatkomponente nur die kurzen Alkohole (C₁-C₄) erwünscht, da sonst das Verarbeitungshilfsmittel mit dem Thermoplasten unverträglich wird.

Kurzkettige Verarbeitungshilfsmittel auf PMMA-Basis sind aus der GB-PS 1 347 287 bekannt. Diese kurzkettigen Polyacrylate dienen als Fließverbesserer, für PVC-Verarbeitungen auf Kalander-Walzen sind sie jedoch weniger geeignet, da ein zu schnelles Anbacken des Thermoplasten an den Kalander-Walzen auftritt.

In den Patenten bzw. Offenlegungsschriften DE 16 94 409, 21 35 024, 41 25 477, EP 0 061 134, 0 184 851 und 0 367 198 werden auch mehrstufige Verarbeitungshilfsmittel beschrieben.

Bei den bekannten Verarbeitungshilfsmitteln für Thermoplaste, insbesondere PVC, handelt es sich nach dem oben Gesagten in aller Regel um Polymere oder Copolymere, die nach dem Verfahren der Emulsionspolymerisation erhältlich sind.

Aus den bei der Emulsionspolymerisation erhaltenen Dispersionen kann der darin enthaltene Feststoff durch Verfahren wie Sprühtrocknen, Gefriertrocknen oder Koagulieren isoliert und dann seiner Verwendung als Verarbeitungshilfsmittel für Thermoplaste zugeführt werden.

Über die bereits erwähnten Eigenschaften hinaus ist es für Verarbeitungshilfsmittel häufig erforderlich, weitere Eigenschaften im Thermoplasten, insbesondere in PVC, zu entfalten. So sind dem Fachmann Verarbeitungshilfsmittel bekannt, die zusätzliche Gleitmittelwirkung aufweisen, z. B. DE 21 35 024 C2.

Für spezielle Anwendungen, wie z. B. die Herstellung von Hohlkörpern wie Flaschen oder dergleichen aus PVC oder anderen thermoplastischen Kunststoffen, müssen Verarbeitungshilfsmittel nahezu frei von Restmonomeren sein, um keine Beeinträchtigung von Geruch oder Geschmack der in den Hohlkörpern aufbewahrten Flüssigkeiten und Getränke zu verursachen. S. a. Market Development for PVC Mineral Water and Wine Bottles in Western Europe; Current Status and Projection for the Future; V. K. Sahajpal; Journal Vinyl Technology; 1989, Vol. 11, No. 3, S. 115.

Grundsätzlich ist es möglich, das Restmonomer entweder aus den auspolymerisierten Dispersionen direkt oder auch aus dem, aus den Dispersionen isolierten, Feststoff zu entfernen.

So erfährt man aus Ullmanns Enzyklopädie der technischen Chemie, 4. Aufl., Bd. 19, Seite 15, daß es möglich ist, den Restmonomergehalt von auspolymerisierter Dispersion durch Einleiten von Wasserdampf und/oder bei vermindertem Druck durch Zusatz von Entschäumern zu erniedrigen. In anderen Fällen kann man den Gehalt an Restmonomeren durch nachträgliche Zugabe von Polymerisationsinitiator und weiteres Erhitzen der Dispersion (sog. Nachkatalyse) erniedrigen. Die mit diesen Verfahren erreichbare Erniedrigung des Restmonomergehaltes reicht jedoch für die erforderlichen niedrigen Restmonomerwerte zur Verwendung der erhaltenen Verarbeitungshilfsmittel in Getränkeflaschen aus thermoplastischem Kunststoff, insbesondere PVC, nicht aus.

Weiterhin ist es bekannt, daß es beim Sprühtrocknen von Polymerdispersionen zur Verringerung des Restmonomergehaltes kommt. Doch auch hier gelingt es nicht, den Restmonomergehalt auf das geforderte niedrige Niveau zu erniedrigen.

In der DE 40 21 961 A1 wird ein Verfahren zur Herstellung restmonomerarmer Emulsionspolymerisate beschrieben, bei welchem sprühgetrocknete Emulsionspolymerisate mit Inertgas bei Temperaturen zwischen 30 - 200 °C unter ständiger Durchmischung in einem geeigneten Behälter nachbehandelt werden. Die Temperatur des Inertgases liegt dabei 15 - 50 °C oberhalb der Erweichungstemperatur des Emulsionspolymerisates. Die Durchmischung erfolgt in einem Wirbelbett. Behandelt man pulverförmige Emulsionspolymerisate längere Zeit bei Temperaturen oberhalb des Erweichungspunktes, beobachtet man das Zusammensintern der einzelnen Pulverteilchen, was dem Fachmann als Verglasung bekannt ist. Diese Verglasung, die nicht mit Zusammenbacken des gesamten Pulverhaufwerkes zu verwechseln ist, führt zu schlechteren Gebrauchseigenschaften des Emulsionspolymerisates, wenn dieses als Verarbeitungshilfsmittel für thermoplastische Kunststoffe, insbesondere für PVC, verwendet werden soll. Die Verglasung führt zu schlechterem Gelieren der PVC-Rezeptur, was ein sehr nachteiliger Effekt für die Verarbeitung von hart-PVC-Rezepturen ist. Verglaste Pulverteilchen sind außerdem häufig die Ursache von Stippen im Fertigprodukt - ebenfalls ein sehr unerwünschter Nachteil.

Angesichts des dargelegten Standes der Technik liegt mithin der Erfindung die Aufgabe zugrunde, ein Verfahren zur Herstellung eines Verarbeitungshilfsmittels für Thermoplaste, insbesondere PVC, aufzuzeigen, das die Herstellung eines Verarbeitungshilfsmittels gestattet, welches zusätzlich zu den üblichen Eigenschaften, die ein solches Produkt haben soll - z. B. Gelieren der hart-PVC-Rezeptur, Verbessern der rheologischen Eigenschaften u. a., einen sehr niedrigen Restmonomergehalt aufweist, so daß es für Einsatzzwecke geeignet ist, bei denen ein zu hoher Restmonomergehalt zu geruchlicher oder geschmacklicher Beeinträchtigung führt; z. B. Getränkeflaschen aus PVC.

Außerdem soll das Verfahren zur Herstellung des restmonomerarmen Verarbeitungshilfsmittels mit üblichen technischen Mitteln in einer bestehenden Anlage ausführbar sein. Es sollten keine zusätzlichen technischen Hilfsmittel benötigt werden, welche zu einer Verlängerung der Herstellung des Produktes und damit zu einer Verteuerung des Produktes führen. Aufgabe der Erfindung ist auch ein Emulsionspolymerisat mit sehr geringem Restmonomergehalt sowie dessen Verwendung.

Diese Aufgaben werden durch ein Verfahren der eingangs erwähnten Art mit den Merkmalen des Anspruchs 1 gelöst.

Dadurch, daß man das Emulsionspolymerisat zunächst einer Nachkatalyse unterzieht, bei der durch nachträgliche Zugabe von Polymerisationsinitiator und Erhitzen der Restmonomergehalt erniedrigt wird, und es im Anschluß daran bei einer Temperatur sprühtrocknet, die oberhalb des Siedepunkts des Methylmethacrylats liegt, wobei die Sprühtrocknungsaustrittstemperatur unterhalb der Glastemperatur des Polymerisats liegt, gelingt es, ein Produkt bereitzustellen, das alle insbesondere an ein Verarbeitungshilfsmittel für thermoplastische Kunststoffe zu stellenden Anforderungen erfüllen kann und gleichzeitig in einem verhältnismäßig einfachen Prozeß herstellbar ist.

Durch Kombination zweier verschiedener Verfahren, die jedes für sich zur Restmonomererniedrigung eingesetzt werden können, welche aber allein angewendet nicht ausreichen, um die erforderlichen niedrigen Restmonomergehalte zu erreichen, gelang es erfindungsgemäß, den Restmonomergehalt des Emulsionspolymerisats auf das erforderliche Niveau abzusenken. Dies wird durch Nachkatalyse der aus dem Emulsionsprozeß resultierenden Dispersion und Sprühtrocknen bei sehr hohen Trocknungstemperaturen erreicht.

Dabei war es von vornherein nicht ohne weiteres absehbar, daß die Kombination zweier, für sich allein bekannten Methoden zur Verringerung des Monomergehalts von Emulsionspolymerisaten zu einem brauchbaren Ergebnis führt.

So führt z. B. bei kommerziell erhältlichen PVC-Verarbeitungshilfsmitteln diese Kombination von Verfahrensschritten zu einer Verglasung der sprühgetrockneten Emulsionspolymerisate, da die hierzu nötigen Trocknungstemperaturen bei erhöhter Austrittstemperatur zur Verglasung der Pulver führen, wenn die Trocknungstemperaturen oberhalb der Erweichungstemperatur liegen.

Wenn man aber mit der Austrittstemperatur bei der Sprühtrocknung, also der höchsten angewandten Temperatur, unterhalb der Erweichungstemperatur bleibt, ist es in vielen Fällen nicht möglich, einen ausreichenden Restmonomerentfernungseffekt zu gewährleisten. Es ist daher besonders bevorzugt, daß man die Sprühtrocknung bei einer Temperatur durchführt, die oberhalb des Siedepunkts des Methylmethacrylats (bezogen auf den Normaldruck von 1013 hPa) liegt.

Daneben spielt für die Erfindung auch die Differenz zwischen Sprühtrocknungsaustritts-Temperatur und Tg des Polymerisats eine spezielle Rolle.

So ist es in weiterhin vorteilhafter erfindungsgemäßer Verfahrensmodifikation bevorzugt, daß man die Sprühtrocknung bei einer Sprühtrocknungsaustrittstemperatur von (Tg - Y) [°C] durchführt, wobei Tg die Glasübergangstemperatur des Homopolymerisats in °C und der Zahlenwert von Y zwischen 2 und 30, bevorzugt zwischen 5 und 15, ist.

Bei den erfindungsgemäßen Polymerisaten mit geringem Restmonomergehalt handelt es sich um Emulsionspolymerisate.

Für die Emulsionspolymerisation selbst benötigt man wasserlösliche Radikalbildner wie Natriumperoxodisulfat oder auch wasserlösliche Azoinitiatoren oder wasserlösliche Peroxide und Hydroperoxide. Diese Radikalbildner werden häufig zusammen mit Reduktionsmitteln wie Natriumsulfit, Natriumformaldehydsulfoxylat oder anderen eingesetzt. Um die Polymerisationswärme zu kontrollieren, bedient man sich verschiedener Zulaufverfahren wie Emulsionszulauf, Monomerzulauf, getrennter Zulauf von Monomer und anderen Hilfsstoffen wie Emulgatoren. Man unterscheidet auch Batchverfahren und Saatlatexverfahren. Diese Verfahren werden u. a. dazu verwendet, um die freiwerdende Polymerisationswärme besser kontrollieren zu können, aber auch um z. B. die Teilchengröße der Dispersionsteilchen einzustellen. Für die Emulsionspolymerisation werden auch Emulgatoren und Dispergatoren benötigt. Hierbei sind kationische, anionische, amphotere und nicht ionische Verbindungen gebräuchlich. Als Beispiele hierfür sind Produkte wie Alkalisalze von längerkettigen Fettsäuren, Alkylsulfate, Alkylsulfonate, alkylierte Arylsulfonate, Alkalisalze der Sulfobernsteinsäure oder andere zu nennen. Weitere Hilfsstoffe wie Natriumhydroxid, Puffer, rheologische Additive, Stabilisatoren sind möglich und werden vom Fachmann je nach gewünschtem Effekt eingesetzt. Je nach gewünschter Eigenschaft der Dispersion oder der zu isolierenden Feststoffe werden die oben beschriebenen Rohstoffe miteinander kombiniert und nach einem der oben erwähnten Verfahren oder Kombinationen derselben auspolymerisiert. Die Polymerisationstemperatur kann zwischen 40 und 95 °C eingestellt werden. Man kann mit oder ohne Druck polymerisieren.

Typischerweise erhält man Dispersionsteilchen mit einem mittleren Teilchendurchmesser von 40 - 500 Nanometer. Andere Teilchengrößen sind möglich.

Viele weitere Einzelheiten kann man z. B. entnehmen aus: Polymer Colloids; Elsiever Applied Science Publishers London and New York; R. Buscall, T. Corner, J. F. Stageman.

Das für die Erfindung wichtige Nachkatalyseverfahren ist allgemeiner Stand der Technik. Im einzelnen hat es sich im Rahmen der Erfindung als nützlich erwiesen, die Nachkatalyse folgendermaßen durchzuführen. Nach Ende des Monomer- oder Emulsionszulaufs wird die Dispersion noch 0,5 h bei 90 °C unter Rühren nachgeheizt. Dann wird der in Wasser gelöste Initiator Natriumperoxodisulfat auf einmal zur Dispersion gegeben. Man heizt weiterhin bei 90 °C und führt das Rühren fort, bis der gewünschte Effekt Restmonomererniedrigung eingetreten ist. Siehe Bsp. 5, Tabelle 3. Weitere Beschreibungen der Nachkatalyse findet man in Ullmann's Enzyklopädie der technischen Chemie, 4. Aufl., Bd. 19, Seite 15.

Durch den einzelnen Schritt der Nachkatalyse ist im allgemeinen eine Absenkung des Restmonomergehalts auf 1000 ± 100 ppm möglich.

Das Verfahren der Sprühtrocknung ist literaturbekannt. Für die Erfindung ist es vorzuziehen, da durch Sprühtrocknen eine günstige Pulvermorphologie erlangt wird. Die sprühgetrockneten Pulverteilchen zerfallen bei der Verarbeitung durch den Einfluß von Scherung und Temperatur in die Primärteilchen. Dadurch können die Verarbeitungshilfsmittel gut in Thermoplaste eingearbeitet werden.

Die Kombination von Nachkatalyse und Sprühtrocknung wird bevorzugt erfindungsgemäß so durchgeführt, daß die zu behandelnden Polymerisate einen Restmonomergehalt ≤ 100 ppm, bevorzugt ≤ 50 ppm und besonders bevorzugt ≤ 30 ppm, aufweisen.

Weiterhin hat es sich im Rahmen der Erfindung als günstig erwiesen, die Nachkatalyse über wenigstens 0,5 h vorzunehmen, vorzugsweise bis 3 h und insbesondere zwischen 0,75 und 2 h.

Wird eine Zeit von 0,5 h unterschritten, dann wird der maximal niedrige Restmonomergehalt nicht erreicht. Wird eine Zeit von 3 h überschritten, dann beobachtet man keine weitere Erniedrigung der Restmonomerwerte mehr.

Mit der Erfindung läßt sich unverglastes, sprühgetrocknetes Emulsionspolymerisat aus Polymethylmethacrylat erhalten, das sich durch einen Restmonomergehalt von weniger als 50 ppm und bevorzugt von weniger als 30 ppm kennzeichnet.

Mit dem erfindungsgemäßen Verfahren gelang es erstmals, ein gleichzeitig sprühgetrocknetes und unverglastes Emulsionspolymerisat der vorgenannten Spezifikation zur Verfügung zu stellen.

Die erfindungsgemäßen restmonomerarmen Polymerisate eignen sich insbesondere als Verarbeitungshilfsmittel für thermoplastische Kunststoffe, vorwiegend für thermoplastisches PVC. Insgesamt gesehen, war es für die Erfindung überraschend, daß ein Emulsionspolymerisat mit einer Glasübergangstemperatur, die deutlich höher liegt als die kommerziell erhältlicher PVC-Verarbeitungshilfsmittel, trotzdem gute Wirksamkeit als PVC-Verarbeitungshilfsmittel entfaltet. Dies insbesondere auch deswegen, weil es grundsätzlich nicht möglich ist, die Glasübergangstemperatur des PVC-Verarbeitungshilfsmittels immer höher zu legen, um dadurch immer höhere Trocknungstemperaturen in der Sprühtrocknung zu ermöglichen. PVC ist ein Thermoplast, der bei möglichst niedrigen Schmelztemperaturen verarbeitet werden muß, um thermischen Abbau des Polymeren während der Verarbeitung zu vermeiden. Üblicherweise beobachtet man 50 K oberhalb der Glastemperatur des Polymerisats ein erstes meßbares Fließen von Polymerschmelzen. Das bedeutet, daß man die Glasübergangstemperatur eines PVC-Verarbeitungshilfsmittels nicht zu hoch einstellen darf, da sonst die Gefahr besteht, daß es in der PVC-Schmelze nicht aufschmilzt und dann nicht wirksam werden kann.

Daß es gelang, durch neuartige Kombination verschiedener bekannter Verfahren der Restmonomererniedrigung ein PVC-Verarbeitungshilfsmittel mit ausreichend niedrigem Restmonomergehalt zu entwickeln, war überraschend, da insbesondere keine weiteren zusätzlichen technischen Einrichtungen zur Kombination der beiden Verfahren nötig sind. Dies war dem ersten Anschein nach nicht zu erwarten. Insbesondere war nicht zu erwarten, daß die einzelnen Verfahrensschritte so vorteilhaft miteinander kombiniert werden können, daß es beim Sprühtrocknen nicht zur Verglasung der Pulver der Emulsionspolymerisate kommt.

Im folgenden wird die Erfindung eingehender anhand von Beispielen erläutert.

### Allgemeine Herstellungsvorschrift für Emulsionspolymerisate

### (Herstellungsbeispiel 1)

In einen Glasreaktor von 5 1-Volumen gibt man 1452 g vollentsalztes Wasser und erhitzt dieses unter Rühren und Inertgasatmosphäre auf 86,5 °C. Dann gibt man eine 5 %ige wäßrige Lösung Natriumperoxodisulfat in den Reaktor. Dann läßt man eine Emulsion aus 1076 g vollentsalztem Wasser, 2250 g Methylmethacrylat, 250 g n-Butylmethacrylat, 76,7 g Diisooctylsulfosuccinat (als 75 %ige wäßrige Lösung), nach folgendem Modus in den Reaktor zulaufen und auspolymerisieren: 10 Minuten lang 14,3 g/Minute und 117 Minuten lang 29,9 g/Minute. Nach Ende des Zulaufs wird noch 30 Minuten unter Rühren bei 90 °C nachgeheizt. Die dann vorliegende Dispersion hat einen Trockengehalt von 49,1 %; eine Teilchengröße von 237 Nanometer; einen pH-Wert von 3,6; einen Koagulatanteil von 8 g (inklusive Anbackungen im Reaktor).
Diese Dispersion wird in einem herkömmlichen Sprühtrockner sprühgetrocknet bei 160 °C Eintrittstemperatur und 70 °C Austrittstemperatur. Das so erhaltene Pulver hat eine Viskositätszahl von 381 ccm/g, eine Glastemperatur von 120 °C und eine Schüttdichte von 463 g/l.
Nach diesem oder geringfügig modifizierten Verfahren kann der Fachmann aus anderen acrylischen, methacrylischen Monomeren oder auch Styrol und Styrolderivaten oder auch Vinyletherderivaten oder Vinylketonen oder Vinylaromaten eine Vielzahl unterschiedlicher Homo- und Copolymerer herstellen. Dies ist bekannt und muß nicht weiter erläutert werden. Die Produkte wurden verschiedenen Verfahren der Restmonomererniedrigung unterworfen und unter verschiedenen Bedingungen sprühgetrocknet, um möglichst niedrige Restmonomergehalte im pulverförmigen Emulsionspolymerisat zu erhalten. Im folgenden werden die Einzelheiten geschildert.

### Vergleichsbeispiel 2:

Analog zu dem in der allgemeinen Herstellungsvorschrift beschriebenen Verfahren wurde eine Dispersion aus Methylmethacrylat hergestellt mit einer Viskositätszahl VZ = 308 ccm/g und einer Teilchengröße von 219 nm. Der Feststoffgehalt der Dispersion betrug 50,1 %. Diese Dispersion wurde ohne weitere Behandlung zur Restmonomererniedrigung der Sprühtrocknung unterworfen, um das Emulsionspolymerisat als Pulver zu isolieren. Einzelheiten zum Sprühtrocknungsverfahren kann man der Quelle: Spray Drying Handbook, third edition; K. Masters, George Godwin Ltd. London; J. Wiley and Sons New York, entnehmen. Die im folgenden verwendeten Begriffe Eintrittstemperatur und Austrittstemperatur sind die Temperaturen der Trocknungsluft bei Eintritt in den Sprühturm und bei Austritt aus dem Sprühturm.

Die Sprühtrocknungsexperimente wurden in einem herkömmlichen Sprühtrockner durchgeführt. Die Versuche wurden mit Zerstäuberscheibe durchgeführt, bei einer Drehzahl von 15000 U/Minute. Der Durchsatz an Dispersion betrug zwischen 10 l/h und 25 l/h. Die Trocknungstemperaturen sind bei den jeweiligen Beispielen angegeben.

Die Dispersion aus Vergleichsbeispiel 2, deren Rest-Methylmethacrylatgehalt 1962 ppm betrug, wurde den in Tabelle 1 angegebenen Trocknungsbedingungen unterworfen (VB 2a, VB 2b). Es ist zu erkennen, daß das als Pulver isolierte Emulsionspolymerisat aus Vergleichsbeispiel 2 einen nicht ausreichend niedrigen Restmonomergehalt hat. Die Rieselzeit des höher getrockneten Pulvers ist von der des bei niedriger Temperatur getrockneten Pulvers nicht verschieden. REM-Aufnahmen zeigen, daß beide Pulverproben unverglast sind.

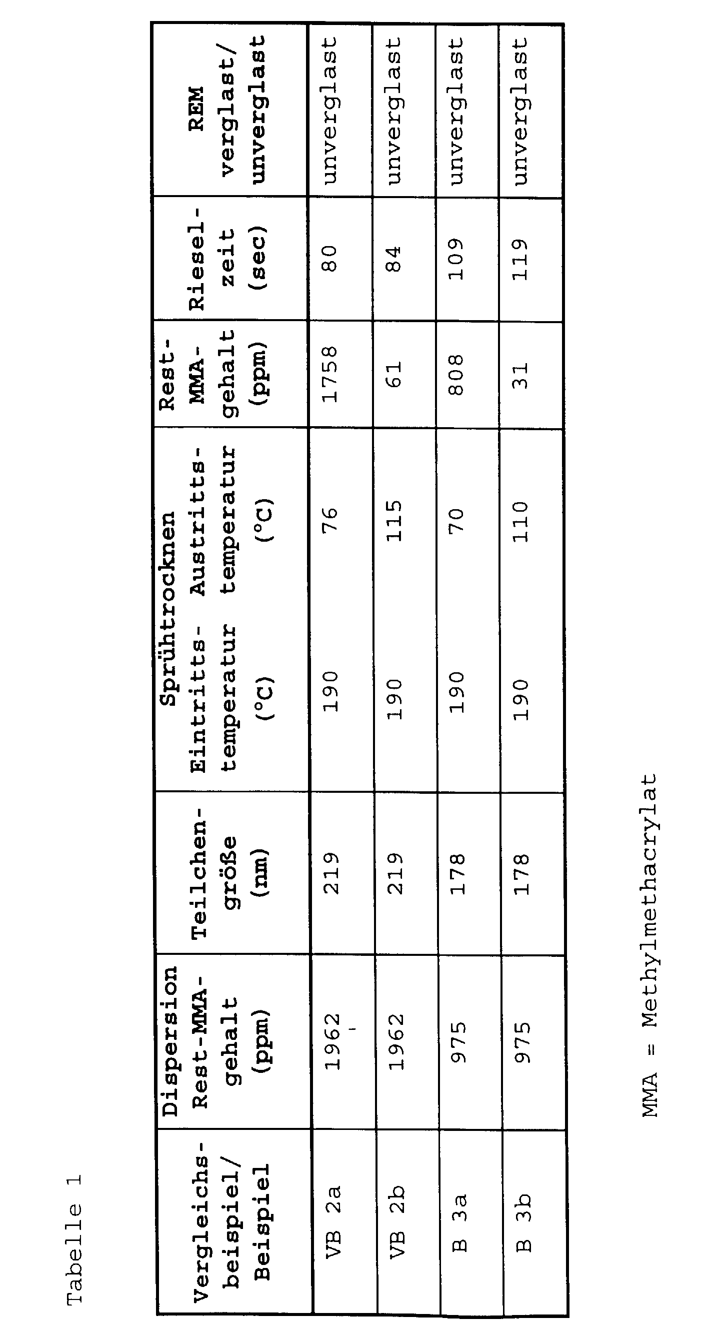

### Beispiel 3:

Nach dem in der allgemeinen Herstellungsvorschrift beschriebenen Verfahren wird eine Dispersion aus Methylmethacrylat hergestellt, welche folgende Eigenschaften aufweist:
Viskositätszahl 261 ccm/g; Teilchengröße 178 nm; Viskosität 12 cP und ein Feststoffgehalt von 45,7 %. Diese Dispersion wurde 1 Stunde mit 0,016 % Gew. Natriumperoxodisulfat (bezogen auf den Feststoffgehalt der Dispersion) bei 90 °C und unter Rühren nachgeheizt. Dieser Vorgang wird im folgenden als Nachkatalyse bezeichnet. Der Restmonomergehalt der Dispersion betrug dann 975 ppm Methylmethacrylat.
Unterwirft man nun diese Dispersion den Sprühtrocknungsbedingungen aus Vergleichsbeispiel 2a und 2b, so erkennt man, daß der Restmonomergehalt der pulverförmigen, sprühgetrockneten Emulsionspolymerisate bei höheren Austrittstemperaturen die gewünschten niedrigen Werte erreicht. Aus Tabelle 1 sieht man, daß Nachkatalyse allein - Beispiel 3, den Restmonomergehalt der Dispersion nicht ausreichend absenkt. Dies zeigt, daß zur Erzielung sehr niedriger Restmonomerwerte eine Kombination von zwei Verfahren der Restmonomererniedrigung in sich ergänzender Weise erforderlich ist, um möglichst niedrige Restmonomerwerte zu erreichen.

### Vergleichsbeispiel 4:

Nach dem in der allgemeinen Herstellungsvorschrift beschriebenen Verfahren wurde eine Dispersion aus Methylmethacrylat hergestellt, welche folgende Eigenschaften aufwies:
Viskositätszahl 290 ccm/g; Teilchengröße 184; Feststoffgehalt 49,2 %. Diese Dispersion wurde mit 0,1 % Gew. (bezogen auf Feststoffgehalt) Natriumperoxodisulfat nachkatalysiert. Die Nachkatalyse dauerte 3 h bei 90 °C unter Rühren. Aus Tabelle 2 ist zu entnehmen, daß eine Erhöhung der Konzentration an Natriumperoxodisulfat nicht zu einem niedrigerem Restmonomergehalt führt, sondern den nachteiligen Effekt zeigt, daß die Koagulatmenge zunimmt. Dies wird durch die Wirkung von Natriumperoxodisulfat als Elektrolyt verständlich.

**Tabelle 2**

| **Vergleichsbeispiel** | **Rest-MMA-gehalt (ppm)** | **Koagulat (bez. Feststoff) (% Gew.)** |
|---|---|---|
| 3 | 975 | 0,04 |
| 4 | 1038 | 1,17 |

### Beispiel 5:

Nach dem in der allgemeinen Herstellungsvorschrift beschriebenen Verfahren wurde eine Dispersion aus Methylmethacrylat hergestellt, welche folgende Eigenschaften aufweist:
Viskositätszahl 326 ccm/g; Teilchengröße 173 nm; Feststoffgehalt 48,4 %. Diese Dispersion wurde mit 0,016 % Gew. Natriumperoxodisulfat (bezogen auf Feststoffgehalt) bei 90 °C unter Rühren nachkatalysiert. Die Nachkatalysezeit war 120 min. Die Daten in Tabelle 3 zeigen, daß bereits nach 1 Stunde ein konstanter Restmonomergehalt erreicht worden war und, daß weiteres Nachheizen nicht erforderlich ist. An der Dispersion aus Beispiel 5 wurde untersucht, wie sich eine Erhöhung der Eintrittstemperatur - verglichen mit der aus Beispiel 1 und 2 auf den Restmonomergehalt auswirkt. Die Ergebnisse in Tabelle 4 zeigen, daß es möglich ist, bei erhöhter Eintrittstemperatur zu sprühtrocknen und trotzdem bei Austrittstemperaturen von 115 - 125 °C zu restmonomerarmen Pulvern zu kommen. Die erhöhte Eintrittstemperatur hat - wie dem Fachmann bekannt ist - den Vorteil, daß höherer Durchsatz beim Sprühtrocknen gefahren werden kann.

**Tabelle 3**

| **Beispiel** | **Dauer Nachkatalyse (min)** | **Rest-MMA-gehalt (ppm)** |
|---|---|---|
| 5 | 0 | 3719 |
| | 27 | 2105 |
| | 60 | 1073 |
| | 90 | 1090 |
| | 120 | 1054 |

**Tabelle 4**

| **Beispiel** | **Eintrittstemperatur (°C)** | **Austrittstemperatur (°C)** | **Rest-MMA-gehalt (ppm)** | **Rieselzeit (sec.)** | **REM verglast/unverglast** |
|---|---|---|---|---|---|
| 5 | 220 | 115 | 41 | 82 | unverglast |
| | 220 | 120 | 26 | 74 | unverglast |
| | 220 | 125 | 26 | 52 | anverglast |
| | 220 | 130 | 31 | 60 | verglast |

### Vergleichsbeispiel 6:

Nach dem in der allgemeinen Herstellungsvorschrift gezeigten Verfahren wurde eine Dispersion aus Methylmethacrylat hergestellt, welche folgende Eigenschaften aufweist:
Feststoffgehalt 49,4 %, Viskositätszahl 301 ccm/g; Teilchengröße 208 nm. In diese Dispersion wurde 3 Stunden und 20 Minuten Wasserdampf eingeleitet und Wasser/Monomerdämpfe abdestilliert. Mit Hilfe eines Rohres, an dessen Ende ein Verteileraggregat für Wasserdampf angebracht war, wurde niedrig gespannter Dampf in die Dispersion eingeleitet. Vor dem Dampfeinleiten gab man herkömmlichen Entschäumer (kieselsäuremodifiziertes Silikonöl als 17 %ige wässrige Dispersion, Entschäumer G, Fa. Degussa; 0,3 % Gew. bezogen auf Feststoff) in die Dispersion, um das Aufschäumen zu unterdrücken. Der Dampfdruck betrug 1,2 - 1,7 bar. Ein Teil des Dampfes kondensierte in die Dispersion, so daß sich der Feststoffgehalt von 49,4 auf 47,5 % Gew. erniedrigte. Tabelle 5 zeigt, daß der Restmonomergehalt der Dispersion nach 3 Stunden und 20 Minuten auf 380 ppm erniedrigt war. Diese Dispersion wurde sprühgetrocknet; die Restmonomerwerte sind in Tabelle 5 aufgelistet. Man erkennt, daß durch Wasserdampfeinleiten und Abdestillieren von Wasser/Monomerdämpfen der Restmonomergehalt der Dispersion deutlich verringert werden kann. Der Restmonomergehalt der Dispersion ist mit 380 ppm sehr niedrig, doch waren lange Einleitungszeiten erforderlich. Der Restmonomergehalt im sprühgetrockneten Pulver betrug bei einer Austrittstemperatur von 116 °C 16 ppm.

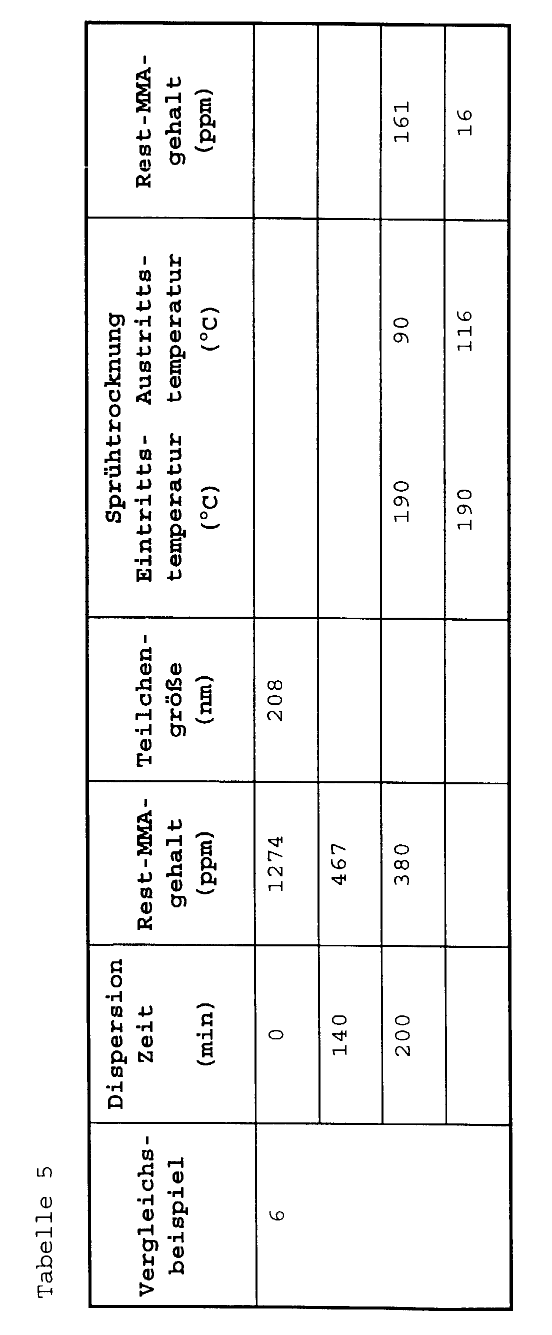

### Vergleichsbeispiel 7:

In Anlehnung an die allgemeine Herstellungsvorschrift wurde eine Dispersion aus Methylmethacrylat hergestellt, welche folgende Eigenschaften zeigte:
Rest-MMA-Gehalt 2007 ppm, Feststoffgehalt: 49,3 %; Viskositätszahl 280 ccm/g; Teilchengröße 183 nm. Um zu deutlich kürzeren Zeiten des Wasserdampfeinleitens zu kommen, waren sowohl der Reaktor als auch Zu- und Ableitungen thermisch isoliert worden. Dadurch gelang es, in kürzerer Zeit den Restmonomergehalt der Dispersion auf niedrigste Werte zu verringern. Nach 70 Minuten war der Rest-MMA-Gehalt der Dispersion bei 280 ppm, nach 120 Minuten betrug der Rest-MMA-Gehalt der Dispersion 232 ppm. Diese restmonomerarme Dispersion wurde unter den in Tabelle 6 angegebenen Bedingungen sprühgetrocknet. Es zeigte sich, daß auch sehr restmonomerarme Dispersionen bei erhöhten Austrittstemperaturen getrocknet werden müssen, um die erforderlichen Rest-Monomergehalte im Pulver zu erhalten. Bei 116 °C Austrittstemperatur betrug der Rest-MMA-Gehalt 15 ppm.

### Vergleichsbeispiel 8:

Nach dem in der allgemeinen Herstellungsvorschrift gezeigten Verfahren wurde eine Dispersion aus Methylmethacrylat synthetisiert, welche folgende Eigenschaften aufweist:
Feststoffgehalt 49,4 % Gew., Viskositätszahl 301 ccm/g, Teilchengröße 212 nm, Restmonomergehalt 1367 ppm. In diese Dispersion gab man 0,3 % Gew. herkömmlichen Entschäumer (kieselsäuremodifiziertes Silikonöl, Entschäumer G, Fa. Degussa, als 17 %ige wässrige Dispersion) und verringerte den Reaktorfüllgrad auf 66 %. Man legte Vakuum an von 200 - 300 hPa und destillierte 95 Minuten lang ein Wasser/Monomer-Gemisch ab. In der Tabelle 6 sind die Restmonomergehalte der Dispersion und der sprühgetrockneten Pulver zusammengefaßt. Man erkennt, daß auch beim Abdestillieren zur Erzielung niedriger Restmonomergehalte erhöhte Austrittstemperaturen beim Sprühtrocknen nötig sind. Der Restmonomergehalt im Pulver erfüllte mit 23 ppm den geforderten Wert.

### Vergleichsbeispiel 9:

Wie in der allgemeinen Herstellungsvorschrift beschrieben, wurde eine Dispersion aus Methylmethacrylat hergestellt, welche folgende Eigenschaften aufweist. Viskositätszahl 289 ccm/g; Feststoffgehalt der Dispersion 50,1 %; Teilchengröße der Dispersionsteilchen 214 nm; Restmonomergehalt 1341 ppm. Bei diesem Versuch wurde sowohl Wasserdampf eingeleitet, als auch Vakuum angelegt. Das Wasserdampfeinleiten wurde wie bei Beispiel 6 durchgeführt. Nach 115 Minuten hatte man eine Dispersion, die einen Restmonomergehalt von 354 ppm Restmonomer aufwies. In Tabelle 6 sind die Ergebnisse aufgeführt. Sprühtrocknen bei erhöhter Austrittstemperatur führte zu Restmonomergehalten von 20 ppm Rest-MMA.

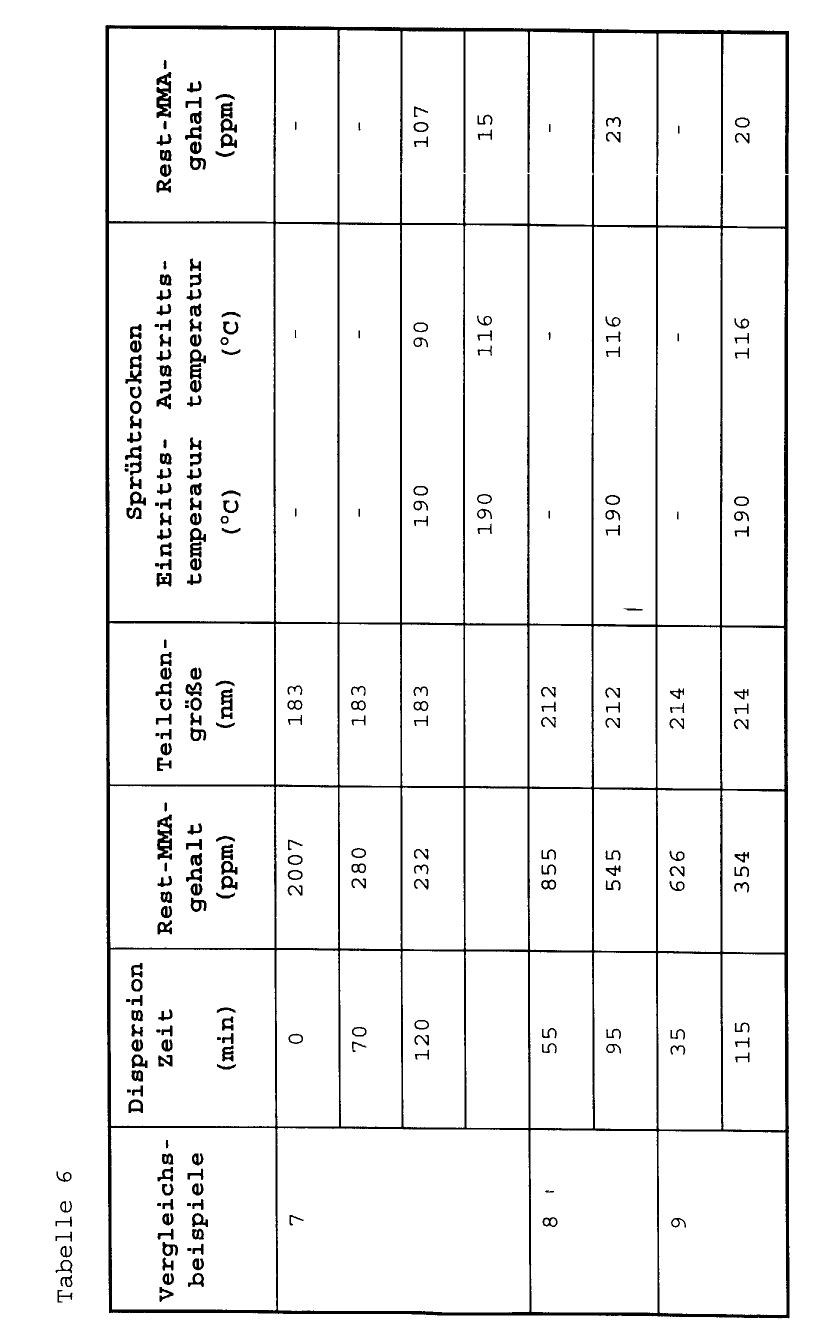

### Vergleichsbeispiel 10:

Um zu prüfen, wie sich verglaste Pulverteilchen bei der Verarbeitung in Hart-PVC-Rezepturen verhalten, wurde ein Copolymer aus Methylmethacrylat (80 Teile) und n-Butylmethacrylat (20 Teile), das eine Viskositätszahl von 308 ccm/g hatte, eine Schüttdichte von 477 g/l aufwies und eine Glastemperatur von 108 °C hatte, bei 95 °C für 0,5 und 1 Stunde im Trockenschrank getempert. Eine weitere Probe wurde im Trockenschrank für 0,5 und 1 Stunde bei 120 °C getempert. D. h. dieses Produkt wurde einmal oberhalb und einmal unterhalb der Glastemperatur thermisch behandelt. In Tabelle 7 sind die beobachteten Eigenschaftsänderungen aufgeführt.
Die Probe, die oberhalb der Glastemperatur getempert worden war, ist völlig verglast, d. h. die Pulverteilchen sind in sich zusammengesintert. Dies ist erkennbar durch REM-Aufnahmen der Pulverteilchenoberfläche. Des weiteren wird durch die Verglasung die Rieselzeit des Pulvers deutlich verkürzt.
Der Randwinkel des Pulvers - ermittelt im Pharmatestgerät - erhöht sich von 28° auf 32°.

### Vergleichsbeispiel 11:

Um das Verarbeitungsverhalten des verglasten Pulvers zu untersuchen, wurden 4 Teile der getemperten Pulver aus Vergleichsbeispiel 10 in die anschließend beschriebene PVC-Prüfrezeptur eingearbeitet.
2500,0 g eines PVC-Pulvers (Vinnol® H 65 D, Fa. Wacker); 150,0 g Calciumcarbonat (Omyalite® 95 T, Fa. Omya); 100,0 g Titandioxid (Kronos Cl 220); 125,0 g Barium/Cadmium-Stabilisator (Bäropan E 16435 FP, Fa. Bärlocher GmbH) werden im Fluid- oder Flügelmischer (Heiz-Kühl-Mischer) zu einem PVC-dryblend verarbeitet. Man gibt die einzelnen Rohstoffe in den Mischer und läßt die Mischung bei hoher Drehzahl des Fluidmischers auf 120 °C Massetemperatur erwärmen. Bei niedriger Drehzahl wird auf unter 40 °C Massetemperatur abgekühlt und dann der Mischer entleert. 100 Gew.-Teile der so hergestellten Prüfrezeptur wurden mit 4 Teilen der in Beispiel 10 beschriebenen Pulver auf dem Rollenstuhl gemischt und im herkömmlichen Messkneter bei einer Gehäusetemperatur von 170 °C und einer Drehzahl von 50 U/Minuten geliert. Gelieren bedeutet, daß die Pulvermischung unter dem Einfluß von Scherung und Wärme von pulvriger Konsistenz in ein kompaktes, festes Material überführt wird. Unter Gelierzeit versteht man die Zeit vom Messbeginn bis zum Drehmomentmaximum der registrierten Drehmomentkurve. Es ist deutlich zu erkennen (siehe Tabelle 7), daß Tempern oberhalb der Glastemperatur des PVC-Verarbeitungshilfsmittels zu längeren Gelierzeiten des PVC-dryblends führt.

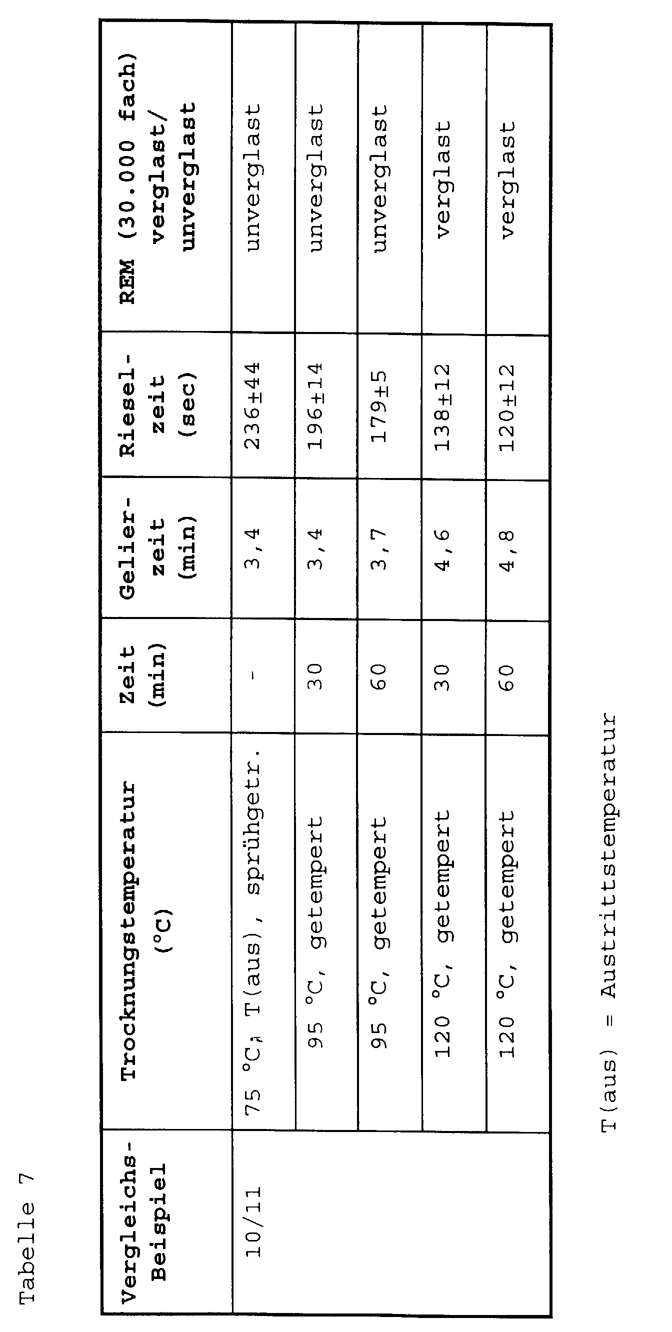

### Eingesetzte Untersuchungsmethoden:

Head-Space Gaschromatographie:
Die im Text angegebenen Restmonomerwerte wurden nach der Methode "Head-Space-Gaschromatographie" ermittelt. Die wäßrige Dispersion oder das pulverförmige PVC-Verarbeitungshilfsmittel wird in Dimethylformamid - in dem sich gleichzeitig der interne Standard n-Butylacetat befindet - in einer verschlossenen Probenflasche gelöst. Man temperiert 30 Minuten lang bei 120 °C; hierbei stellt sich das Gleichgewicht zwischen flüssiger und Gasphase ein. Nach Einstellen des Gleichgewichtes injiziert man die Gasphase in den Gaschromatographen. Auf der 1/8" temperaturlinearen Carbowax 20 M-Säule erfolgt die Auftrennung der Restmonomeren. Als Detektor dient ein FID. Die Auswertung erfolgt nach der internen Standard-Methode (ISTD). Für die Messungen wurde eine herkömmliche GC (Perkin-Elmer HS 101, GC 8500 FID Backflush-Precut) verwendet. Die GC-Ofentemperatur betrug 103 °C, die ISO-Time war 41,8 Minuten. Die Injektortemperatur betrug 170 °C. Das Trägergas war Stickstoff. Das Lösemittel wird mittels Backflush-Technik zurückgespült.

### Pharma Test

Zur Ermittlung der Rieselzeit und des Randwinkels von pulverförmigen, rieselfähigen Schüttgütern wird das Gerät Pharma-Test Typ PTG der Fa. Pharma Test Gerätebau GmbH verwendet. Der Messtrichter wird mit dem zu untersuchenden Pulver gefüllt. Nach dem Betätigen eines Schiebers rieselt das Pulver durch eine Düse von 10 mm Durchmesser auf eine Wägeschale und wird dort gesammelt. Durch eine elektronische Messeinrichtung wird die Zeit ermittelt, die das Pulver benötigt, um aus dem Trichter auszulaufen. Über eine Lichtschranke kann auch aus der Höhe des Schüttkegels der Randwinkel des Pulvers ermittelt werden.

Glasübergangstemperatur; Tg-Wert
Die Glasübergangstemperatur oder auch Tg-Wert wird durch Differentialthermoanalyse ermittelt. Die DTA-Messungen wurden mit einem DTA-Gerät der Fa. Mettler durchgeführt. Typ: Messzelle DSC 30. Die Aufheizgeschwindigkeit betrug 20 °C/Minute, wenn nicht anders vermerkt.

Rasterelektronenmikroskop; Bestimmung der Verglasung von Pulverteilchen
Die elektronenmikroskopischen Aufnahmen wurden mit dem Gerät JSM 6400 der Fa. Jeol durchgeführt. Zur Probenvorbereitung wurden die in den Beispielen angegebenen Pulver auf ein leitfähigen Klebegrund gegeben und mit Gold besputtert. Diese Pulver wurden dann mit Vergrößerungen von 5.000 - 30.000 untersucht. Die verglasten Pulverteilchen sind eindeutig daran zu erkennen, daß die Oberfläche des Pulverteilchens zusammengesintert ist, d. h. eine zusammenhängende glatte Oberfläche aufweist, während bei unverglasten Pulverteilchen die Primärteilchen aus der Dispersion, die sich beim Sprühtrocknen zu den Pulverteilchen zusammenlagern, klar zu erkennen sind. Die Oberfläche unverglaster Pulverteilchen ist nicht zusammengesintert.

Weitere Ausführungsformen und Vorteile der Erfindung ergeben sich aus den nachfolgenden Patentansprüchen.

## Patentansprüche

1. Verfahren zur Herstellung von unverglasten, restmonomerarmen Homopolymerisaten des Methylmethacrylats,
bei dem man eine Dispersion eines Emulsionspolymerisats aus Methylmethacrylat herstellt,
**dadurch gekennzeichnet,**
daß man das Emulsionspolymerisat zunächst einer Nachkatalyse unterzieht, bei der durch nachträgliche Zugabe von Polymerisationsinitiator und Erhitzen der Restmonomergehalt erniedrigt wird, und es danach bei einer Temperatur sprühtrocknet, die oberhalb des Siedepunkts des Methylmethacrylats liegt, wobei die Sprühtrocknungsaustrittstemperatur unterhalb der Glastemperatur des Polymerisats liegt.

2. Verfahren nach Anspruch 1,
dadurch gekennzeichnet,
daß man die Sprühtrocknung bei einer Sprühtrocknungsaustrittstemperatur von (Tg - Y) [°C] durchführt, wobei Tg die Glasübergangstemperatur des Homopolymerisats in °C und der Zahlenwert von Y zwischen 2 und 30, bevorzugt zwischen 5 und 15, ist.

3. Verfahren nach einem der vorhergehenden Ansprüche,
dadurch gekennzeichnet,
daß Nachkatalyse und Sprühtrocknung bis zu einem Restmonomergehalt des Homopolymerisats von ≤ 100 ppm, bevorzugt ≤ 50 ppm und besonders bevorzugt ≤ 30 ppm, durchgeführt werden.

4. Verfahren nach einem der vorhergehenden Ansprüche,
dadurch gekennzeichnet,
daß die Nachkatalyse über wenigstens 0,5 h durchgeführt wird, vorzugsweise über 3 h und insbesondere über 0,75 bis 2 h.

## Claims

1. Process for preparing non vitrified homopolymers of methyl methacrylate having low residual monomer content,
in which a dispersion of an emulsion polymer of methyl methacrylate is prepared,
characterised in that
the emulsion polymer is first subjected to after-catalysis, during which the residual monomer content is reduced by secondary addition of polymerisation initiator and heating, and it is then spray-dried at a temperature which is above the boiling point of methyl methacrylate, the spray drying outlet temperature being below the glass transition temperature of the polymer.

2. Process according to claim 1,
characterised in that
the spray drying is carried out at a spray drying outlet temperature of (Tg - Y) [°C], Tg being the glass transition temperature of the homopolymer in °C and the numerical value of Y being between 2 and 30, preferably between 5 and 15.

3. Process according to one of the above claims,
characterised in that
after-catalysis and spray drying are carried out down to a residual monomer content in the homopolymer of ≤ 100 ppm, preferably ≤ 50 ppm and particularly preferably ≤ 30 ppm.

4. Process according to one of the above claims,
characterised in that
the after-catalysis is carried out for at least 0.5 h, preferably for 3 h and especially for 0.75 to 2 h.

## Revendications

1. Procédé de préparation d'homopolymères non vitrifiés de méthacrylate de méthyle à faible teneur en monomère résiduel, par lequel on prépare une dispersion d'un polymère d'émulsion de méthacrylate de méthyle, caractérisé en ce que l'on soumet d'abord le polymère d'émulsion à une post-catalyse, qui consiste à diminuer la teneur en monomère résiduel par addition ultérieure d'un initiateur de polymérisation et par échauffement ultérieur et que l'on sèche ensuite par pulvérisation, le polymère d'émulsion à une température qui se situe au-dessus du point d'ébullition du méthacrylate de méthyle, la température de sortie du séchage par pulvérisation se situant en-dessous de la température de vitrification du polymère.

2. Procédé selon la revendication 1, caractérisé en ce que le séchage par pulvérisation est réalisé à une température de sortie de séchage par pulvérisation de (Tg-Y) [°C] où Tg représente la température de transition de vitrification de l'homopolymère en °C et où la valeur numérique de Y se situe entre 2 et 30, de préférence entre 5 et 15.

3. Procédé selon l'une quelconque des revendications précédentes, caractérisé en ce que la post-catalyse et le séchage par pulvérisation sont réalisés jusqu'à une teneur en monomère résiduel du homopolymère ≤ à 100 ppm, de préférence ≤ à 50 ppm et de manière particulièrement préférée ≤ à 30 ppm.

4. Procédé selon l'une quelconque des revendications précédentes, caractérisé en ce que la post-catalyse est réalisée pendant au moins 0,5 h, de préférence 3 h et de manière particulièrement préférée, de 0,75 à 2 h.
